(19) **Europäisches Patentamt**
**European Patent Office**
**Office européen des brevets**

(11) **EP 3 080 207 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(21) Anmeldenummer: **14833502.9**

(22) Anmeldetag: **10.12.2014**

(51) Int Cl.:
*C09C 1/00* (2006.01)          *C09C 1/02* (2006.01)
*C09C 1/36* (2006.01)          *C09C 3/06* (2006.01)

(86) Internationale Anmeldenummer:
**PCT/EP2014/003306**

(87) Internationale Veröffentlichungsnummer:
**WO 2015/086146 (18.06.2015 Gazette 2015/24)**

(54) **CALCIUMPHOSPHAT-HALTIGE TITANDIOXID-KOMPOSITPIGMENTE UND VERFAHREN ZU IHRER HERSTELLUNG**

TITANIUM DIOXIDE COMPOSITE PIGMENTS CONTAINING CALCIUM PHOSPHATE AND METHOD FOR THE PRODUCTION THEREOF

PIGMENTS COMPOSITES DE DIOXYDE DE TITANE CONTENANT DU PHOSPHATE DE CALCIUM ET PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2013 EP 13005813**

(43) Veröffentlichungstag der Anmeldung:
**19.10.2016 Patentblatt 2016/42**

(73) Patentinhaber: **Kronos International, Inc.**
**51373 Leverkusen (DE)**

(72) Erfinder:
• **MERSCH, Frank**
**42799 Leichlingen (DE)**
• **WILKENHOENER, Uwe**
**42113 Wuppertal (DE)**

(56) Entgegenhaltungen:
**EP-A1- 1 354 628          WO-A1-2011/081874**
**WO-A2-2007/120810      JP-A- 2003 275 600**

**Beschreibung**

Gebiet der Erfindung

Die Erfindung betrifft Calciumphosphat-haltige Kompositpigmente mit hoher Witterungs- und chemischer Beständigkeit, ihre Herstellung und ihre Verwendung in Beschichtungen, Kunststoffen und insbesondere in Papier und Laminat.

Technologischer Hintergrund der Erfindung

Anorganische Pigmente und insbesondere Titandioxidpigmente werden oft in verschiedene Matrices als Weißmacher, Tönungsmittel oder Trübungsmittel eingearbeitet. Titandioxid streut aufgrund seiner hohen Brechkraft Licht besonders effizient und ist deswegen das wichtigste Weißpigment in den Anwendungsbereichen Farben und Lacke, Kunststoffe, Papier und Fasern. Die Lichtstreueffizienz sinkt, wenn die Titandioxidpartikel in einem geringeren Abstand als etwa der halben Wellenlänge des Licht, also etwa 0,20 bis 0,25 $\mu$m voneinander entfernt in der Matrix verteilt sind. Die Lichtstreueffizienz wird typischerweise mit Hilfe des Deckvermögens bzw. des Aufhellvermögens (tinting strength) des Titandioxidpigments in der Matrix gemessen.

Titandioxid ist auf der anderen Seite ein signifikanter Kostenfaktor, und es wird seit längerem nach Möglichkeiten gesucht, um die Einsatzmenge an Titandioxid zu verringern, ohne signifikante Einbußen im Deckvermögen hinnehmen zu müssen.

Eine Einsparung ist möglich durch die Kombination von Titandioxidpartikeln mit geeigneten Füllstoffen, die als sogenannte "Extender-Partikel" als Abstandshalter für die $TiO_2$-Partikel wirken sollen. Die bekannten Verfahren umfassen sowohl die einfache Mischung der Komponenten als auch die Verbindung der $TiO_2$-Partikel mit den Extender-Partikeln mittels eines ausgefällten Bindemittels oder die in situ-Ausfällung des Extenders auf der Oberfläche der Titandioxidpartikel. Desweiteren sind Verfahren bekannt, um die feinen Titandioxidpartikel auf gröberen Füllstoffpartikeln zu verteilen.

Aus dem umfangreich vorliegenden Stand der Technik werden im Folgenden nur ausgewählte Schriften zitiert.

WO 1999/035193 A1 beschreibt beispielsweise die Herstellung einer Pigmentmischung aus Titandioxid und einem anorganischen Extender ("Spacer") wie $SiO_2$ oder $CaCO_3$ zur Verwendung bei der Papierherstellung.

DE 10 057 294 C5 offenbart ein Pigmentgemisch aus Titandioxid und Talkum zum Einsatz in Dekorrohpapier.

EP 0 861 299 B1 offenbart ein Titandioxidpigment, welches mit anorganischen Nanopartikeln, beispielsweise kolloidaler Kieselsäure, sowie einer Schicht aus anorganischen Oxiden wie Aluminium-, Silicium- oder Zirkonoxid beschichtet ist, wobei die anorganische Oxidschicht entweder zwischen Titandioxidoberfläche und Nanopartikeln angeordnet ist oder die äußere Deckbeschichtung bildet. Bei den anorganischen Nanopartikeln handelt es sich um $SiO_2$, $Al_2O_3$ oder $CaCO_3$.

DE 10 2006 012 564 A1 offenbart Titandioxidpigmentpartikel, auf deren Oberfläche sich Mikrohohlkugeln sowie eine Aluminiumoxid-Aluminiumphosphat-Beschichtung befinden.

In dem Verfahren gemäß EP 0 956 316 B1 werden Pigmentteilchen und gefälltes Calciumcarbonat (PCC) in wässriger Phase miteinander vermischt, so dass ein Kompositpigment entsteht, bei dem die Carbonatteilchen mit einer Teilchengröße von 30 bis 100 nm an die Oberfläche der Pigmentteilchen angeheftet sind. Das Kompositpigment enthält 30 bis 90 Gew.-% gefälltes Calciumcarbonat.

DE 1 792 118 A1 offenbart die in situ-Ausfällung von Calciumcarbonat in einer Titandioxidpigmentsuspension durch Vermischen einer Calciumchlorid- und einer Natriumcarbonatlösung, wobei eine dieser Lösungen Titandioxidpigment enthält. Es entstehen Calciumcarbonat-Titandioxid-Kompositparfikel.

WO 2000/001771 A1 offenbart ein Kompositpigment, das anorganische Partikel einer Partikelgröße von etwa 1 bis 10 $\mu$m enthält und an deren Oberfläche in Folge entgegengesetzter Oberflächenladung Titandioxidpigmentpartikel geheftet sind. Die Herstellung erfolgt in einer wässrigen Phase. Die anorganischen Partikel sind ausgewählt aus gängigen Füllstoffen wie z.B. Kaolin, Ton, Talkum, Glimmer oder Carbonate.

WO 2014/000874 A1 offenbart ein Kompositpigment, das Titandioxid und ein partikuläres Material als Extender enthält sowie Calciumcarbonat, das im Herstellungsprozess gefällt wird. Die Kompositpartikel werden in einem kombinierten Prozess aus Dispergierung und Fällung hergestellt. Das Kompositpigment ist geeignet zur Verwendung in Beschichtungen, Kunststoff und Laminat.

Aufgabenstellung und Kurzbeschreibung der Erfindung

Der Erfindung liegt die Aufgabe zugrunde, ein alternatives Kompositpigment zu schaffen, welches eine hohe Witterungsbeständigkeit und chemische Beständigkeit aufweist und insbesondere im Vergleich zu reinem Titandioxid mindestens ein gleiches Deckvermögen erreicht.

Desweiteren besteht die Aufgabe in der Angabe eines Verfahrens zur Herstellung.

Die Aufgabe wird gelöst durch ein Calciumphosphat-haltiges Kompositpigment enthaltend Titandioxidpigmentpartikel und gefälltes partikuläres kristallines Calciumphosphat in einer Menge von mindestens 10 Gew.-%, bevorzugt mindestens 30 Gew.-% und insbesondere mindestens 50 Gew.-% bezogen auf Kompositpigment, wobei das gefällte Calciumphosphat eine Partikelgröße von mindestens 200 nm aufweist.

Die Aufgabe wird desweiteren gelöst durch ein Verfahren zur Herstellung von Calciumphosphat-haltigen Kompositpigmentpartikeln umfassend die Schritte:

a) Bereitstellen einer wässrigen Suspension enthaltend anorganische Pigmentpartikel sowie Bereitstellen einer Calcium-Quelle und einer Phosphor-Quelle,

b) Zusammenführung der Komponenten Suspension der anorganischen Pigmentpartikel, Calcium-Quelle und Phosphor-Quelle in beliebiger Reihenfolge,

c) Fällung von partikulärem Calciumphosphat, so dass Kompositpigmentpartikel gebildet werden, die Calciumphosphat in einer Menge von mindestens 10 Gew.-%, bevorzugt mindestens 30 Gew.-% und insbesondere mindestens 50 Gew.-% bezogen auf Kompositpigment enthalten,

d) Abtrennen der Kompositpigmentpartikel aus der Suspension.

Weitere vorteilhafte Ausformungen der Erfindung sind in den Unteransprüchen angegeben.

Figuren

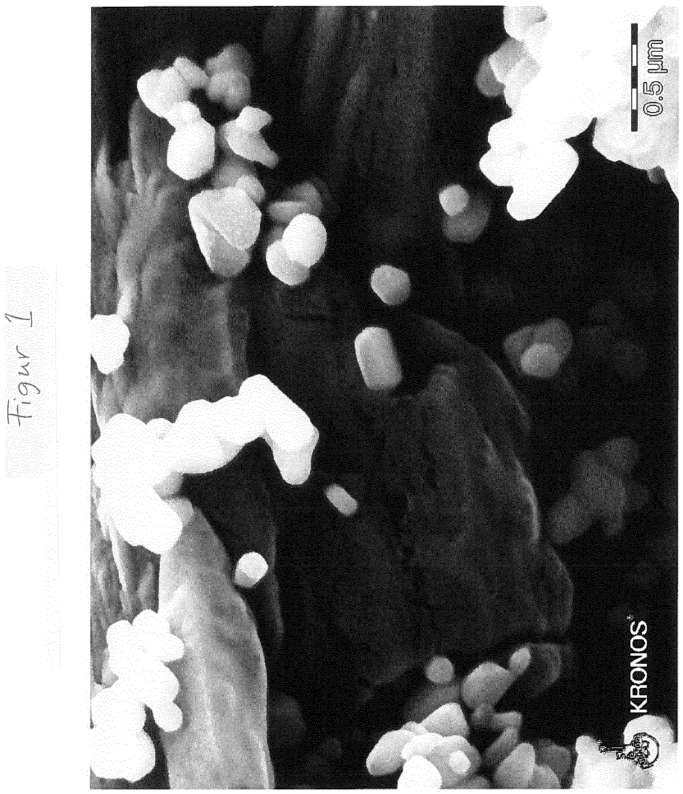

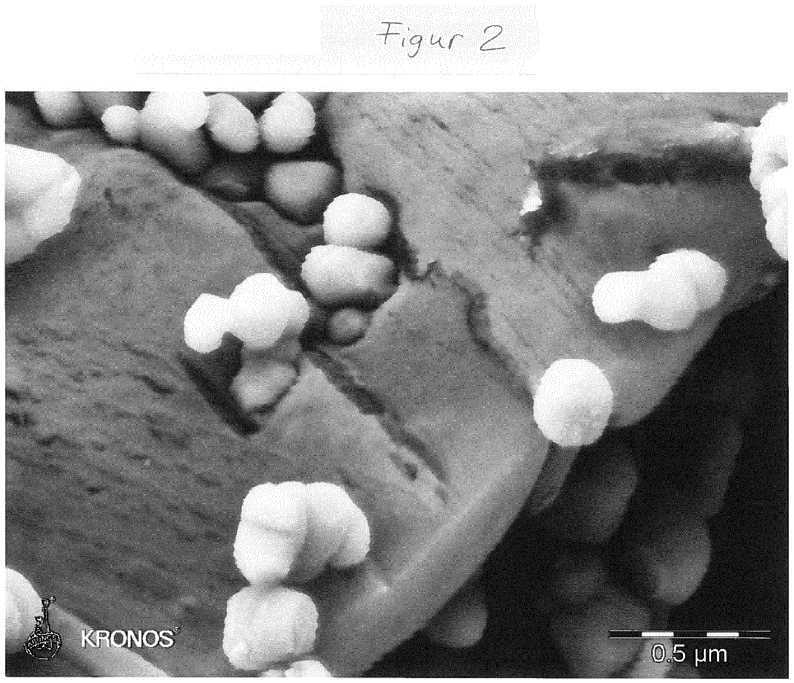

Figuren 1 und 2: Rasterelektronenmikroskopaufnahmen von Kompositpigmentpartikeln gemäß Beispiel 1.

Beschreibung der Erfindung

Alle im Folgenden offenbarten Angaben bezüglich Größe in $\mu$m usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Die erfindungsgemäßen Kompositpigmentpartikel enthalten Titandioxidpigmentpartikel und in situ gefällte Calciumphosphatpartikel. Unter Calciumphosphat wird im Rahmen der Erfindung Calciumorthophosphat oder wasserfreies oder wasserhaltiges Calciumhydrogenphosphat verstanden. Dazu gehören beispielsweise Brushit, Monetit und Apatit. Die gefällten Calciumphosphatpartikel bilden diskrete Partikel bzw. Partikelagglomerate und wirken als Träger für die Pigmentpartikel oder als Abstandshalter (Extender). Die erfindungsgemäßen Kompositpartikel zeichnen sich weiterhin dadurch aus, dass zwischen Träger- bzw. Extenderpartikel und Pigmentpartikel ein starker Verbund existiert, der in der weiteren üblichen Verarbeitung beim Anwender wie z.B. bei der Dispergierung in einem Dissolver oder in einem Inline-Dispergierer nur schwer getrennt werden kann. Damit unterscheidet sich das erfindungsgemäße Kompositpigment von bekannten Pigment-Extender-Mischungen.

Die im Rahmen der Erfindung eingesetzten Titandioxidpigmentpartikel weisen eine mittlere Partikelgröße von etwa 100 nm bis etwa 1 $\mu$m bevorzugt 200 nm bis 400 nm.
Grundsätzlich können oberflächenbehandelte Titandioxidpigmentpartikel oder unbehandelte Titandioxidpigmentpartikel, sogenannter Titandioxidgrundkörper verwendet werden. Bevorzugt werden unbehandelte Titandioxidgrundkörper-Partikel verwendet, insbesondere Titandioxidgrundkörper-Partikel aus dem Chloridprozess. Die Titandioxidpigmentpartikel können dotiert sein, vorzugsweise mit Aluminium. Wirtschaftlich besonders vorteilhaft ist es, nach dem Chloridprozess hergestellte, nicht-sandgemahlene und nicht-entchlorte Titandioxidgrundkörper-Partikel einzusetzen. Alternativ ist es auch möglich, sandgemahlene und entchlorte Titandioxidgrundkörper-Partikel aus dem Chloridprozess oder sandgemahlene Titandioxidgrundkörper-Partikel aus dem Sulfatprozess einzusetzen.

Die Calciumphosphatpartikel sind überwiegend kristallin. Sie weisen eine Partikelgröße von mindestens 0,2 $\mu$m, bevorzugt mindestens 0,5 $\mu$m und insbesondere mindestens 1,0 $\mu$m auf. In einer besonderen Ausführung der Erfindung sind die Calciumphosphatpartikel größer als die Titandioxidpigmentpartikel. Die Calciumphosphatpartikel sind sowohl Primärpartikel wie Partikelagglomerate.
Die erfindungsgemäßen Kompositpartikel enthalten bevorzugt mindestens 10 Gew.-%, insbesondere mindestens 30 Gew.-% und insbesondere bevorzugt 50 Gew.-% Calciumphosphat. Der Pigmentgehalt der Kompositpartikel beträgt vorzugsweise 10 bis 90 Gew.-%.
Damit unterscheidet sich das erfindungsgemäße Kompositpigment von bekannten Titandioxidpartikeln, die mit einer insitu gefällten Calciumphosphatbeschichtung versehen wurden, beispielsweise zur Verbesserung der photokatalytischen Eigenschaften (EP 1 354 628 A1) oder zur Verwendung als Korrosionsschutzpigment (WO 2011/081874 A1).

In einer besonderen Ausführung der Erfindung enthält das Kompositpigment zusätzlich mindestens einen weiteren anorganischen und/oder mindestens einen organischen Füllstoff. Der anorganische Füllstoff kann ausgewählt sein aus der Gruppe natürliche und synthetische Silikate (z.B. Talkum, Kaolin, Glimmer, Mullit, Quarz, Kieselgele, gefällte Kieselsäure, pyrogene Kieselsäure, Silicumdioxid, oberflächenbehandeltes Siliciumdioxid), Carbonate (z.B. natürliches oder gefälltes Calcium- oder Magnesiumcarbonat, Dolomit), Sulfate (z.B. natürliches oder gefälltes Calcium- und Bariumsulfat), Oxide/Hydroxide (z.B. Aluminiumoxid, Aluminiumhydroxid, Magnesiumoxid), natürliche Gesteine wie Basalt- und Bimsmehl, Perlite sowie weitere dem Fachmann bekannten Füllstoffe (z.B. Wollastonit, Feldspate, Glimmer, faserartige Füllstoffe, Glasmehl, etc.).

Der weitere Füllstoff weist bevorzugt eine Partikelgröße von etwa 0,1 bis 30 $\mu$m, insbesondere von etwa 1 bis 10 $\mu$m auf. Der weitere Füllstoff kann in einer Menge von 10 bis 90 Gew.-%, bevorzugt 20 bis 80 Gew.-% und insbesondere 30 bis 70 Gew.-% enthalten sein.

Die erfindungsgemäßen Kompositpigmentpartikel enthalten das Pigment in ideal dispergierter Form und führen damit im Anwendersystem zu einer Steigerung der Effizienz der Lichtstreuung des Titandioxidpigments. Auf diese Weise kann der Teil des Pigments, der üblicherweise im Anwendersystem nicht ideal dispergiert, sondern "geflockt" vorliegt, eingespart werden. Die Kompositpigmentpartikel führen im Anwendersystem bei gleicher Pigmentmenge zu verbessertem Deckvermögen, bzw. erlauben im Anwendersystem eine Reduktion des Pigmentgehalts bei gleichbleibendem Deckvermögen.

Die erfindungsgemäßen Kompositpigmentpartikel können durch Zusammenführung der Komponenten wässrige Suspension von Titandioxidpigmentpartikel, Calcium-Quelle und Phosphor-Quelle hergestellt werden.

Zunächst wird eine wässrige Suspension von Titandioxidpigmentpartikeln bereitgestellt. Die Titandioxidpigmentpartikel weisen eine mittlere Partikelgröße von etwa 100 nm bis etwa 1 $\mu$m bevorzugt 200 nm bis 400 nm auf. Die Titandioxidpigmentpartikel können oberflächenbehandelt oder unbehandelt - sogenannter Titandioxidgrundkörper - sein, beispielsweise kann es sich um Titandioxidgrundkörper aus dem Sulfatprozess oder dem Chloridprozess handeln. Insbesondere sind nach dem Chloridprozess hergestellte, gemahlene oder ungemahlene und ggfs. nicht-entchlorte Titandioxidgrundkörper-Partikel geeignet. Ebenso geeignet sind sandgemahlene Titandioxidgrundkörper-Partikel aus dem Sulfatprozess.

Desweiteren wird eine Calcium-Quelle bereitgestellt. Bei der Calcium-Quelle kann es sich um Calciumcarbonat, Calciumphosphat (z.B. Apatit) oder um ein lösliches Calciumsalz handeln wie beispielsweise Calciumchlorid, Calciumnitrat oder gebrannter oder gelöschter Kalk. Bei Calciumcarbonat als Calciumquelle kann es sich um eine dem Fachmann bekannte kommerziell übliche Calciumcarbonatvariante handeln. Vorteilhafterweise verfügt das eingesetzte Calciumcarbonat über einen hohen Weißgrad. Die Partikelgröße beträgt bis zu mehreren mm. Bevorzugt wird natürliches Calciumcarbonat in Form von Kalkstein, Kreide oder Marmormehl verwendet.

Desweiteren wird eine Phosphor-Quelle bereitgestellt. Als Phosphor-Quelle geeignet sind beispielsweise Phosphorsäure, Phosphate, Hydrogenphosphat, Dihydrogenphosphat und Polyphosphate.

Die Zusammenführung der Komponenten Suspension der Titandioxidpigmentpartikel, Calcium-Quelle und Phosphor-Quelle kann in beliebiger Reihenfolge erfolgen.

In einer Ausführung der Erfindung wird von der wässrigen Suspension der Titandioxidpigmentpartikel ausgegangen. In die Suspension wird die Calcium-Quelle und die Phosphor-Quelle gegeben, wobei die Reihenfolge der Zugabe von Calcium-Quelle und Phosphor-Quelle beliebig ist.

Vorzugsweise weist die Suspension nach Zugabe der Calcium-Quelle und der Phosphor-Quelle einen pH-Wert von <3, insbesondere von <2 auf. Der pH-Wert kann ggfs. durch zusätzliche Zugabe einer pH-steuernden Substanz wie Säure, Lauge oder entsprechendes Salz eingestellt werden.

In einer alternativen Ausführung der Erfindung wird zunächst eine wässrige Mischung aus Calcium-Quelle und Phosphor-Quelle hergestellt und anschließend die Titandioxidpigmentpartikel hinzugegeben. Im übrigen wird verfahren wie oben beschrieben. In einer weiteren Ausführung der Erfindung kann auch von einer wässrigen Lösung oder Suspension der Calcium-Quelle ausgegangen werden, in die die Pigmentpartikel und schließlich die Phosphor-Quelle gegeben werden. Entsprechend kann auch von einer wässrigen Lösung der Phosphor-Quelle ausgegangen werden, in die die Pigmentpartikel und schließlich die Calcium-Quelle gegeben werden.

Anschließend wird die Fällung von Calciumphosphat eingeleitet, und es bilden sich Calciumphosphat-haltige Kompositpigmentpartikel. Die Fällung von Calciumphosphat wird entweder durch Erhöhung des pH-Werts auf >2 und/oder durch Erhöhung der Temperatur auf >50°C bevorzugt >60°C veranlasst. Die Erhöhung des pH-Werts kann durch Zugabe einer pH-steuernden Substanz wie z.B. NaOH oder Ca(OH)$_2$ erreicht werden. Das gefällte Calciumphosphat ist überwiegend kristallin und partikelförmig. Die Partikel sind sowohl Primärpartikel wie Partikelagglomerate.

Dem Fachmann ist bekannt, dass die Partikelgröße des gefällten Calciumphosphats durch Variation der Fällungsbedingungen wie Temperatur, pH-Wert-Verlauf, Zugabegeschwindigkeit und über die Zugabe fällungsaktiver Substanzen wie z.B. Kristallkeime, Magnesiumionen oder organische Substanzen gesteuert werden kann. Erfindungsgemäß weisen die Partikel eine Partikelgröße von mindestens 0,2 $\mu$m, bevorzugt mindestens 0,5 $\mu$m und insbesondere mindestens 1,0 $\mu$m auf. In einer besonderen Ausführung der Erfindung sind die Calciumphosphatpartikel größer als die Titandioxidpigmentpartikel.

Die Mengen Phosphat und Calcium werden so abgestimmt, dass die gebildeten Kompositpigmentpartikel vorzugsweise mindestens 10 Gew.-%, insbesondere mindestens 30 Gew.-% und insbesondere bevorzugt mindestens 50 Gew.-% Calciumphosphat enthalten. Der $TiO_2$-Gehalt der Kompositpigmentpartikel beträgt vorzugsweise 10 bis 90 Gew.-%.

In einer besonderen Ausführung der Erfindung wird der Suspension mindestens ein weiterer anorganischer und/oder mindestens ein organischer Füllstoff zugegeben. Der anorganische Füllstoff kann ausgewählt sein aus der Gruppe natürliche und synthetische Silikate (z.B. Talkum, Kaolin, Glimmer, Mullit, Quarz, Kieselgele, gefällte Kieselsäure, pyrogene Kieselsäure, Siliumdioxid, oberflächenbehandeltes Siliciumdioxid), Carbonate (z.B. natürliches oder gefälltes Calcium- oder Magnesiumcarbonat, Dolomit), Sulfate (z.B. natürliches oder gefälltes Calcium- und Bariumsulfat), Oxide/Hydroxide (z.B. Aluminiumoxid, Aluminiumhydroxid, Magnesiumoxid), natürliche Gesteine wie Basalt und Bimsmehl, Perlite sowie weitere dem Fachmann bekannten Füllstoffe (z.B. Wollastonit, Feldspate, Glimmer, faserartige Füllstoffe, Glasmehl, etc.).

Der weitere Füllstoff weist bevorzugt eine Partikelgröße von etwa 0,1 bis 30 $\mu$m, insbesondere von etwa 1 bis 10 $\mu$m auf. Der weitere Füllstoff kann in einer Menge von 10 bis 90 Gew.-%, bevorzugt 20 bis 80 Gew.-% und insbesondere 30 bis 70 Gew.-% bezogen auf Kompositpigmentpartikel zugegeben werden.

Abschließend werden die Kompositpigmentpartikel aus der Suspension abgetrennt, gewaschen und getrocknet.

Je nach gewünschter Qualität des mit den Kompositpigmentpartikeln hergestellten Produkts (Beschichtung, Kunststoff, Paper, Laminat, etc.) kann die Effektivität des Titandioxidpigments, d.h. die Lichtstreueffizienz optimiert werden. Durch Einsparung von Pigment, erreicht durch die effektivere Nutzung im Kompositpigmentpartikel, ergibt sich ein wirtschaftlicher Vorteil im Vergleich zum getrennten Einsatz von Extender und Pigment. Die Verwendung der erfindungsgemäß hergestellten Kompositpigmeritpartikel im Anwendersystem ermöglicht eine Pigmenteinsparung von bis zu 30%, bevorzugt 15 bis 30% bei sonst gleichen optischen Eigenschaften.

Insbesondere kann das Kompositpigment als teilweiser oder 100 %iger Ersatz für das reine Titandioxidpigment eingesetzt werden.

Ein weiterer Vorteil der erfindungsgemäßen Kompositpigmentpartikel liegt in der durch das Calciumphosphat hervorgerufenen Witterungs- und chemischen Beständigkeit. Damit eignen sich die Kompositpigmentpartikel insbesondere für die Verwendung in Laminat und Papier.

Ein weiterer Vorteil liegt darin, dass das Titandioxid im Kompositpigmentpartikel bereits gut verteilt vorliegt und somit Energie für die Dispergierung beispielsweise in einem Lacksystem eingespart werden kann. Die im Vergleich zum reinen Pigment gröberen Kompositpigmentpartikel benötigen weniger Dispergier- und Mahlenergie und geringere Mengen an Dispergiermitteln. Hierdurch ergibt sich für den Lackhersteller ein weiterer Vorteil.

In einer weiteren Ausführung des erfindungsgemäßen Verfahrens können die erfindungsgemäßen Kompositpigmentpartikel mit anorganischen Verbindungen wie beispielsweise $SiO_2$ oder $Al_2O_3$ behandelt werden, wie sie bei der Titandioxidpigmentherstellung üblicherweise eingesetzt werden. Dem Fachmann sind die entsprechenden Verbindungen und Verfahrensweisen bekannt.

In einer besonderen Ausführung des erfindungsgemäßen Verfahrens können zusätzlich organische Additive zugegeben werden, vorzugsweise in einer Menge von 0,05 bis 30 Gew.- % bevorzugt 0,5 bis 10 Gew.-% bezogen auf Pigment-Extendermischung. Die organischen Additive können sowohl in fester als auch in flüssiger Form zugegeben werden. Geeignet als organische Additive sind zum einen handelsübliche wachsartige Additive mit oder ohne weitere chemische Funktionalisierung. Zum anderen sind bekannte Dispergieradditive oder andere in der Lacktechnologie übliche Hilfsstoffe beispielsweise für Rheologie, Entschäumung, Benetzung etc. geeignet.

Die erfindungsgemäßen Kompositpigmentpartikel sind geeignet für die Verwendung in Beschichtungen, Kunststoffen, Papier und Laminat zur Verbesserung der Lichtstreueffizienz des Titandioxidpigments.

Beispiele

Die Erfindung wird anhand der folgenden Beispiele genauer beschrieben, ohne dass dadurch der Umfang der Erfindung eingeschränkt werden soll.

Beispiel 1

In 250 mL 20%iger Phosphorsäure mit einer Temperatur von 25°C wurden unter Rühren 50 g Calciumcarbonat (Marmormehl) gegeben. Nachfolgend wurden weitere 100 mL 20%iger Phosphorsäure zugegeben, so dass sich ein pH-Wert von 1,3 einstellte. Die Reaktion lief unter starker Gasentwicklung ab. Es bildete sich ein geringer Bodensatz von Calciumphosphat.

Anschließend wurden 80 mL einer wässrigen Suspension von unbehandelten Titandioxidpigmentpartikeln mit einer Konzentration von 600 g/L $TiO_2$ unter Rühren zugegeben. Es stellte sich ein pH-Wert von 1,8 ein. Anschließend wurden unter Rühren 63,7 g Calciumhydroxid zugegeben, wobei sich ein pH-Wert von 3,5 einstellte und Calciumphosphat ausfiel. Die Kompositpigmentpartikel wurden anschließend mittels Filtration abgetrennt, gewaschen und getrocknet. Die Kompositpigmentpartikel wurden unter dem Rasterelektronenmikroskop untersucht (Figuren 1, 2). Sie sind i. w. aus großen Calciumphosphat-Kristallen (> 5 μm) aufgebaut, auf deren Oberfläche Titandioxidpartikel fixiert sind (Fig. 1, 2) bzw. die die Titandioxidpartikel umwachsen (Fig. 2).

Beispiel 2

Es wurden Kompositpigmentpartikel gemäß Beispiel 1 hergestellt mit dem einzigen Unterschied, dass anstelle der unbehandelten Titandioxidpigmentpartikel kommerzielles Titandioxidpigment KRONOS 2310 eingesetzt wurde. Die hergestellten Kompositpigmentpartikel enthielten 45 Gew.-% Titandioxidpigment KRONOS 2310 und 55 Gew.-% Calciumphosphat. Das Calciumphosphat bestand im wesentlichen aus Calciumhydrogenphosphat und Brushit (Calciumhydrogenphosphat-Dihydrat).

Anschließend wurden die Kompositpigmentpartikel in eine Innendispersionsfarbe (Testfarbe) mit der in Tabelle 1 angegebenen Rezeptur eingearbeitet, wobei das $TiO_2$-Pigment KRONOS 2310 teilweise durch die Kompositpigmentpartikel gemäß Beispiel 2 ersetzt wurde, so dass der Netto-$TiO_2$-Pigmentgehalt um 10 Gew.-% (Beisp. 2-1), bzw. um 20 Gew.-% (Beisp. 2-2), bzw. um 30 Gew.-% (Beisp. 2-3) jeweils bezogen auf $TiO_2$-Pigment erniedrigt wurde. Die Pigmentvolumenkonzentration (PVK) der Testfarbe betrug 78 %.

Als Vergleichsbeispiel wurde die Testfarbe nur mit dem kommerziellen $TiO_2$-Pigment KRONOS 2310 ohne Kompositpigmentpartikel hergestellt.

Tabelle 1: Rezeptur der weißen Innendispersionsfarbe (Testfarbe)

| | |
|---|---|
| Wasser | 17,75 Gew.-% |
| Calgon N neu (Dispergiermittel) | 0,05 Gew.-% |
| Dispex N 40 (Dispergiermittel) | 0,30 Gew.-% |
| Agitan 315 (Entschäumer) | 0,20 Gew.-% |
| Acticid MBS (Algizid/Fungizid) | 0,40 Gew.-% |
| $TiO_2$-Pigment (KRONOS 2310) | 22,00 Gew.-% |
| Steamat (Füllstoff) | 7,00 Gew.-% |
| Socal $P_2$ (Füllstoff) | 2,00 Gew.-% |
| Omyacarb 2-GU (Füllstoff) | 11,80 Gew.-% |
| Omyacarb 5-GU (Füllstoff) | 15,50 Gew.-% |
| Celite 281 SS(Füllstoff) | 2,00 Gew.-% |
| Tylosepaste (3%ig) | 10,00 Gew.-% |
| Mowilith LDM 1871 (Bindemittel) | 11,00 Gew.-% |

Die Testfarbe wurde hinsichtlich Kontrastverhältnis (KV) und Aufhellvermögen (TS) getestet. Die Messergebnisse sind in Tabelle 2 zusammengefasst.

Tabelle 2: Weiße Innendispersionsfarbe

| | Kontrastverhältnis (Mittelwert 80-125μm) | Aufhellvermögen (TS) (standardisiert) | Netto$TiO_2$-Pigmentgehalt [Gew.-%] |
|---|---|---|---|
| Beispiel 2-1 | 96,7 | 101 | 19,8 |
| Beispiel 2-2 | 96,5 | 100 | 18,7 |
| Beispiel 2-3 | 96,3 | 97 | 17,6 |
| Vergleichsbeispiel | 95,6 | 100 | 22,0 |

Testmethoden

Zur Bestimmung des Kontrastverhältnisses wurde die nach Rezepturvorschrift hergestellte weiße Innendispersionsfarbe (Testfarbe) mit Spaltrakeln (80 - 125 μm) mittels automatischem Filmaufziehgerät mit einer Geschwindigkeit von 12,5 mm/s auf Morest-Kontrastkarten aufgezogen. Anschließend wurden die Farbwerte Y über schwarzem Untergrund ($Y_{(schwarz)}$) und Y über weißem Untergrund ($Y_{(weiß)}$) je dreimal mit dem Spektralphotometer Colorview gemessen. Das Kontrastverhältnis wurde nach folgender Formel errechnet:

$$KV\ [\%] = Y_{(schwarz)} / Y_{(weiß)} \times 100$$

Zur Bestimmung des Aufhellvermögens (TS) wurde 50 g der nach Rezepturvorschrift hergestellten Testfarbe mit 0,5 g Schwarzpaste Colanyl Schwarz PR 130 vermischt und mittels Rakel (Spalthöhe 100 $\mu$m) auf Morestkarten aufgetragen. Die Remissionswerte der Schicht wurden mit einem Byk-Gardner Color View gemessen. Die daraus abgeleiteten TS-Werte sind auf das Vergleichsbeispiel als Standard bezogen

Fazit

Die Verwendung erfindungsgemäßer Kompositpigmentpartikel aus Calciumphosphat und Titandioxid-Pigment beispielsweise Farben ermöglicht je nach gewählter Kombination Pigmenteinsparungen ohne oder mit nur geringen Verlusten der optischen Eigenschaften. Alternativ können bei gleichem Pigmentgehalt auch bessere Werte insbesondere im Aufhellvermögen erzielt werden.

**Patentansprüche**

1. Calciumphosphat-haltiges Kompositpigment enthaltend Titandioxidpigmentpartikel und gefälltes partikuläres kristallines Calciumphosphat in einer Menge von mindestens 10 Gew.-%, bevorzugt mindestens 30 Gew.-% und insbesondere mindestens 50 Gew.-% bezogen auf Kompositpigment,
wobei das gefällte Calciumphosphat eine Partikelgröße von mindestens 0,2 $\mu$m aufweist.

2. Kompositpigment nach Anspruch 1 **dadurch gekennzeichnet, dass**
die Titdandioxid-Partikel in einer Menge von 10 bis 90 Gew.-% enthalten sind.

3. Kompositpigment nach Anspruch 1 oder 2 **dadurch gekennzeichnet, dass**
das gefällte Calciumphosphat eine Partikelgröße von mindestens 0,5 $\mu$m, bevorzugt mindestens 1 $\mu$m aufweist.

4. Kompositpartikel nach einem oder mehreren der Ansprüche 1 bis 3 **dadurch gekennzeichnet, dass**
die Calciumphosphat-Partikel größer sind als die Titandioxid-Partikel.

5. Kompositpartikel nach einem oder mehreren der Ansprüche 1 bis 4 **dadurch gekennzeichnet, dass**
zusätzlich mindestens ein anorganischer oder organischer Füllstoff enthaltend ist.

6. Kompositpartikel nach Anspruch 5 **dadurch gekennzeichnet, dass**
der anorganische Füllstoff ausgewählt ist aus der Gruppe Calcium-, Calciurri-Magnesium- und Magnesium-Carbonate, Sulfate, natürliche Phosphate, Oxide, Hydroxide, Siliciumoxid, Silikate, Alumosilikate, Perlite und Glasmehl.

7. Verfahren zur Herstellung der Calciumphosphat-haltigen Kompositpigmentpartikel gemäß Anspruch 1 umfassend die Schritte:

   a) Bereitstellen einer wässrigen Suspension enthaltend TitandioxidPigmentpartikel sowie Bereitstellen einer Calcium-Quelle und einer Phosphor-Quelle,
   b) Zusammenführung der Komponenten Suspension der anorganischen Pigmentpartikel, Calcium-Quelle und Phosphor-Quelle in beliebiger Reihenfolge,
   c) Fällung von partikulärem kristallinem Calciumphosphat, so dass Kompositpigmentpartikel gebildet werden, die Calciumphosphat in einer Menge von mindestens 10 Gew.-%, bevorzugt mindestens 30 Gew.-% und insbesondere mindestens 50 Gew.-% bezogen auf Kompositpigment enthalten,
   d) Abtrennen der Kompositpigmentpartikel aus der Suspension.

8. Verfahren nach Anspruch 7 **dadurch gekennzeichnet, dass**
als Calcium-Quelle eine Verbindung ausgewählt aus der Gruppe Calciumcarbonat, Calciumphosphat, lösliches Calciumsalz, gebrannter und gelöschter Kalk eingesetzt wird.

9. Verfahren nach Anspruch 8 **dadurch gekennzeichnet, dass**
als Calciumcarbonat Kalkstein, Marmormehl oder Kreide eingesetzt wird.

10. Verfahren nach Anspruch 8 **dadurch gekennzeichnet, dass**
als lösliches Calciumsalz, Calciumchlorid oder Calciumnitrat eingesetzt wird.

**11.** Verfahren nach einem oder mehreren der Ansprüche 7 bis 10 **dadurch gekennzeichnet, dass** als Phosphor-Quelle eine Verbindung ausgewählt aus der Gruppe Phosphorsäure, Phosphat, Hydrogenphosphat, Dihydrogenphosphat und Polyphosphat eingesetzt wird.

**12.** Verfahren nach einem oder mehreren der Ansprüche 7 bis 11 **dadurch gekennzeichnet, dass** die Calciumphosphat-Fällung durch Anhebung des pH-Werts und/oder durch Temperaturerhöhung auf >50°C veranlasst wird.

**13.** Verfahren nach einem oder mehreren der Ansprüche 7 bis 12 **dadurch gekennzeichnet, dass** in die Suspension der anorganischen Pigmentpartikel zusätzlich mindestens ein anorganischer oder ein organischer Füllstoff gegeben wird.

**14.** Verwendung des Kompositpigments nach einem oder mehreren der Ansprüche 1 bis 13 zur Verbesserung der Lichtstreueffizienz des Titandioxidpigments in Beschichtungen, Kunststoffen, Papier und Laminat.


**Claims**

**1.** Composite pigment containing calcium phosphate, comprising titanium dioxide pigment particles and precipitated, particulate crystalline calcium orthophosphate in quantities of at least 10% by weight, preferably at least 30% by weight, and particularly at least 50% by weight, referred to composite pigment, where the precipitated calcium orthophosphate displays a particle size of at least 0.2 $\mu$m.

**2.** Composite pigment according to Claim 1, **characterised in that** the titanium dioxide particles are contained in quantities of 10 to 90% by weight.

**3.** Composite pigment according to Claim 1 or 2, **characterised in that** the precipitated calcium orthophosphate displays a particle size of at least 0.5 $\mu$m, preferably at least 1 $\mu$m.

**4.** Composite particles according to one or more of Claims 1 to 3, **characterised in that** the calcium orthophosphate particles are larger than the titanium dioxide particles.

**5.** Composite particles according to one or more of Claims 1 to 4, **characterised in that** at least one inorganic or organic extender is additionally contained.

**6.** Composite particles according to Claim 5, **characterised in that** the inorganic extender is selected from the group comprising calcium, calcium-magnesium and magnesium carbonates, sulphates, natural phosphates, oxides, hydroxides, silicon oxide, silicates, aluminosilicates, perlites and glass dust.

**7.** Method for manufacturing the composite pigment particles containing calcium phosphate according to Claim 1, comprising the steps:

a) Provision of an aqueous suspension containing titanium dioxide pigment particles, and provision of a calcium source and a phosphorus source,
b) Combination of the components - suspension of inorganic pigment particles, calcium source and phosphorus source - in any order,
c) Precipitation of particulate, crystalline calcium phosphate, such that composite pigment particles are formed that contain calcium phosphate in quantities of at least 10% by weight, preferably at least 30% by weight, and particularly at least 50% by weight, referred to composite pigment,
d) Separation of the composite pigment particles from the suspension.

**8.** Method according to Claim 7, **characterised in that** a compound selected from the group comprising calcium carbonate, calcium phosphate, soluble calcium salt, burnt and slaked lime is used as the calcium source.

**9.** Method according to Claim 8, **characterised in that** limestone, marble dust or chalk is used as the calcium carbonate.

**10.** Method according to Claim 8, **characterised in that**
calcium chloride or calcium nitrate is used as the soluble calcium salt.

**11.** Method according to one or more of Claims 7 to 10, **characterised in that**
a compound selected from the group comprising phosphoric acid, phosphate, hydrogenphosphate, dihydrogenphosphate and polyphosphate is used as the phosphorus source.

**12.** Method according to one or more of Claims 7 to 11, **characterised in that**
calcium phosphate precipitation is induced by raising the pH value and/or increasing the temperature to > 50 °C.

**13.** Method according to one or more of Claims 7 to 12, **characterised in that**
at least one inorganic extender or an organic extender is additionally added to the suspension of inorganic pigment particles.

**14.** Use of the composite pigment according to one or more of Claims 1 to 13 for improving the light-scattering efficiency of the titanium dioxide pigment in coatings, plastics, paper and laminates.


**Revendications**

**1.** Pigment composite contenant du phosphate de calcium contenant des particules de pigment de dioxyde de titane et du phosphate de calcium cristallin particulaire précipité dans une quantité d'au moins 10 % en poids, de préférence au moins 30 % en poids et en particulier au moins 50 % en poids par rapport au pigment composite,
dans lequel le phosphate de calcium précipité présente une grandeur de particule d'au moins 0,2 $\mu$m.

**2.** Pigment composite selon la revendication 1, **caractérisé en ce que** les particules de dioxyde de titane sont contenues dans une quantité de 10 à 90 % en poids.

**3.** Pigment composite selon la revendication 1 ou 2, **caractérisé en ce que** le phosphate de calcium précipité présente une grandeur de particule d'au moins 0,5 $\mu$m, de préférence au moins 1 $\mu$m.

**4.** Particule composite selon l'une ou plusieurs des revendications 1 à 3, **caractérisé en ce que** les particules de phosphate de calcium sont plus grandes que les particules de dioxyde de titane.

**5.** Particule composite selon l'une ou plusieurs des revendications 1 à 4, **caractérisé en ce qu'**en outre au moins un élément de remplissage organique ou anorganique est contenu.

**6.** Particule composite selon la revendication 5, **caractérisé en ce que** l'élément de remplissage anorganique est sélectionné dans le groupe des carbonates de calcium, calcium-magnésium et magnésium, sulfates, phosphates naturelles, oxydes, hydroxydes, oxyde de silicium, silicates, aluminosilicates, perlites et poudre de verre.

**7.** Procédé de fabrication de particules de pigment composite contenant du phosphate de calcium selon la revendication 1 comprenant les étapes :

a) mise à disposition d'une suspension aqueuse contenant des particules de pigment de dioxyde de titane ainsi que mise à disposition d'une source de calcium et d'une source de phosphore,
b) réunion des composants suspension des particules de pigment anorganiques, source de calcium et source de phosphore en ordre quelconque,
c) précipitation de phosphate de calcium cristallin particulaire de sorte que des particules de pigment composite soient formées, qui contiennent du phosphate de calcium dans une quantité d'au moins 10 % en poids, de préférence au moins 30 % en poids et en particulier au moins 50 % en poids par rapport au pigment composite,
d) séparation des particules de pigment composite de la suspension.

**8.** Procédé selon la revendication 7, **caractérisé en ce que**
un composé sélectionné dans le groupe de carbonate de calcium, phosphate de calcium, sel de calcium soluble, chaux vive et éteinte est utilisé comme source de calcium.

**9.** Procédé selon la revendication 8, **caractérisé en ce que**

du calcaire, de la poudre de marbre ou de la craie est utilisé comme carbonate de calcium.

10. Procédé selon la revendication 8, **caractérisé en ce que**
du chlorure de calcium ou du nitrate de calcium est utilisé comme sel de calcium soluble,

11. Procédé selon l'une ou plusieurs des revendications 7 à 10, **caractérisé en ce que**
un composé sélectionné dans le groupe de l'acide phosphorique, phosphate, phosphate d'hydrogène, phosphate de dihydrogène et polyphosphate est utilisé comme source de phosphore.

12. Procédé selon l'une ou plusieurs des revendications 7 à 11, **caractérisé en ce que**
la précipitation de phosphate de calcium est amenée par l'augmentation de la valeur du pH et/ou par l'augmentation de température à > 50 °C.

13. Procédé selon l'une ou plusieurs des revendications 7 à 12, **caractérisé en ce que**
en outre au moins un élément de remplissage anorganique ou organique est ajouté dans la suspension des particules de pigment anorganiques.

14. Utilisation du pigment composite selon l'une ou plusieurs des revendications 1 à 13 pour l'amélioration de l'efficience de diffusion de la lumière du pigment de dioxyde de titane dans des revêtements, des matières plastiques, du papier et du laminé.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 1999035193 A1
- DE 10057294 C5
- EP 0861299 B1
- DE 102006012564 A1
- EP 0956316 B1
- DE 1792118 A1
- WO 2000001771 A1
- WO 2014000874 A1
- EP 1354628 A1
- WO 2011081874 A1